# EUROPÄISCHE PATENTSCHRIFT

(11) **EP 0 664 062 B1**
(45) Veröffentlichungstag und Bekanntmachung des Hinweises auf die Patenterteilung: **14.05.1997**
(21) Anmeldenummer: 93921782.4
(22) Anmeldetag: 28.09.1993
(51) Int. Cl.: H04L 25/08

(54) **ANORDNUNG ZUM ÜBERTRAGEN VON BINÄRSIGNALEN ÜBER EINE SIGNALLEITUNG**
APPARATUS FOR TRANSMITTING BINARY SIGNALS OVER A SIGNAL LINE
DISPOSITIF POUR LA TRANSMISSION DE SIGNAUX BINAIRES PAR L'INTERMEDIAIRE D'UNE LIGNE D'ACHEMINEMENT DE SIGNAUX

(30) Priorität: 07.10.1992 DE 4234402
(43) Veröffentlichungstag der Anmeldung: 26.07.1995
(73) Patentinhaber: SIEMENS AKTIENGESELLSCHAFT, 80333 München (DE)
(72) Erfinder: DUNEMANN, Klaus, D-76307 Karlsbad (DE)
(86) Internationale Anmeldenummer: DE9300926
(87) Internationale Veröffentlichungsnummer: WO9408416

(56) Entgegenhaltungen:
- DE-B- 1 237 173
- DE-B- 1 287 604

## Beschreibung

Werden zum Übertragen von Informationen über eine Signalleitung Binärsignale verwendet, die durch zeitweises Anschalten einer Gleichspannungsquelle mit relativ hoher Spannung an die Signalleitung erzeugt werden, dann muß nach einem Wechsel des Signalpegels die Restladung auf der Signalleitung möglichst rasch abgebaut werden, um eine hohe Baudrate bei der Übertragung zu erreichen bzw. um einen Signalwechsel schnell zu erfassen. Auch müssen Störladungen auf der Signalleitung rasch abgebaut werden. Diese Forderungen sind insbesondere dann von Bedeutung, wenn es sich bei der Signalleitung um eine lange kapazitätsbehaftete Signalleitung handelt. Es muß dann ein hoher Entladestrom für die auf der Signalleitung gespeicherte Ladung sichergestellt werden.

Wird beispielsweise eine Gleichspannungsquelle mit einer Spannung von 220 V verwendet und beträgt die Länge der Signalleitung 1 km, was einer Leitungskapazität von 200 nF entspricht, dann muß ein Entladestrom von 15 mA fließen, wenn die Spannung an der Signalleitung innerhalb 1 ms nach jeweiligem Abtrennen der Gleichspannungsquelle hinreichend weit abgebaut sein soll (von 220 V beispielsweise auf 150 V). Entsprechend groß muß der Entladestrom sein, wenn eine eingekoppelte Störspannung schnell abgebaut werden soll.

Zur Lösung dieses Problems ist es bei einer Anordnung zum Übertragen von Binärsignalen über eine Signalleitung bekannt (Befehls- und Meldebaugruppe des offenkundig vorbenutzten Siemens-Fernwirkgerät SINAUT-LSA), eine Entladeschaltung mit einem Widerstand und nachgeordneter Diodenschaltung an die Signalleitung anzuschließen, über die kontinuierlich ein hoher Entladestrom auch dann fließt, wenn die Gleichspannungsquelle jeweils zeitweise an die Signalleitung angeschlossen ist. Dies führt zu einer Verlustleistung von einigen Watt. Hieraus resultieren thermische Probleme, wenn mehrere Signalleitungen zu einem Gerät führen, in dem demzufolge entsprechend viele Entladeschaltungen vorhanden sein müssen.

Diesbezüglich vorteilhafter ist eine Anordnung zum Übertragen von Binärsignalen über eine Signalleitung an eine Signalerfassungseinrichtung (DE 12 87 604), bei der eine Gleichspannungsquelle unter Erzeugen der Binärsignale jeweils zeitweise an die Signalleitung angeschließbar ist und an die Signalleitung eine Entladeschaltung angeschlossen ist. Bei der bekannten Anordnung wird zum Kompensieren störender Leitungskapazitäten von der Entladeschaltung die Leitung zwischen jeweils durch positive Impulse gebildeten Binärsignalen umgeladen, indem ein gewöhnlich leitend geschalteter Transistor jeweils am Anfang eines positiven Impulses gesperrt und am Ende des jeweiligen Impulses wieder leitfähig wird; dadurch wird ein weiterer Transistor kurzzeitig leitfähig geschaltet, über den vorübergehend eine negative Spannung an die Leitung gelegt wird, wodurch eine Schnellumladung der Leitung erfolgt.

Die Erfindung geht von einer Anordnung zum Übertragen von Binärsignalen über eine Signalleitung an eine Signalerfassungseinrichtung aus, bei der eine Gleichspannungsquelle unter Erzeugen der Binärsignale jeweils zeitweise an die Signalleitung anschließbar ist und an die Signalleitung eine Entladeschaltung angeschlossen ist, und setzt sich die Aufgabe, für eine derartige Anordnung eine Entladeschaltung vorzuschlagen, die ebenfalls zu einer erheblichen verringerten Verlustleistung führt und in die Signalleitung in Pausen zwischen den Binärsignalen eingekoppelte Störungen eliminiert.

Zur Lösung dieser Aufgabe enthält bei dieser Anordnung erfindungsgemäß die Entladeschaltung eine umschaltbare Stromsenke, die an die Signalleitung angeschlossen ist; die Entladeschaltung weist eine Schwellenwert-Erfassungseinrichtung auf, die an die Signalleitung parallel zur umschaltbaren Stromsenke angeschlossen ist, und der Ausgang der Schwellenwert-Erfassungseinrichtung ist mit einem Steuereingang der umschaltbaren Stromsenke derart verbunden, daß ein strombestimmender Widerstand der umschaltbaren Stromsenke durch die Schwellenwert-Erfassungseinrichtung gesteuert veränderbar ist.

Es ist zwar aus der DE 1 237 173 eine Schwellenwert-Erfassungseinrichtung bekannt, jedoch bildet diese einen Bestandteil einer Schaltungsanordnung zur Flankenversteilerung von Impulsen, insbesondere in der Radar- und Fernsehtechnik.

Ein wesentlicher Vorteil der erfindungsgemäßen Anordnung besteht darin, daß bei ihr während des Auftretens des jeweiligen Binärsignals nur ein niedriger Entladestrom über die Entladeschaltung fließt. Erst wenn nach Beendigung des jeweiligen Binärsignals die Spannung auf der Signalleitung absinkt, erhöht sich der Entladestrom. Der erhöhte Entladestrom fließt also nur während der Entladezeit der Signalleitung in den Pausen zwischen den Binärsignalen bzw. nach der Einkopplung von Störungen in die Signalleitung.

Bei der erfindungsgemäßen Anordnung kann die Schwellenwert-Erfassungseinrichtung in unterschiedlicher Weise ausgebildet sein. Als besonders vorteilhaft wird es jedoch angesehen, wenn die Schwellenwert-Erfassungseinrichtung in Reihe mit einem Speicherkondensator eine Diodenanordnung enthält und der Verbindungspunkt von Speicherkondensator und Diodenanordnung den Ausgang der Schwellenwert-Erfassungseinrichtung bildet. Die Diodenanordnung bestimmt dabei mit ihren Diodenschwellen die Ansteuerschwelle für die umschaltbare Stromsenke.

Bei der erfindungsgemäßen Anordnung ist die umschaltbare Stromsenke vorteilhafter Weise steuereingangsseitig mit einem Stromverstärker versehen, wodurch sich in vorteilhafter Weise Kapazitäten der Signalleitung in einer Größe entsprechend dem Stromverstärkungsfaktor multipliziert mit der Kapazität des Speicherkondensators schnell entladen lassen. Als Stromverstärker kann beispielsweise ein Emitterfolger verwendet werden.

Ferner wird es als vorteilhaft angesehen, wenn dem Steuereingang der umschaltbaren Stromsenke eine Verzögerungsschaltung vorgeordnet ist; durch diese Verzögerungsschaltung läßt sich das Ansprechen der umschaltbaren Stromsenke verzögern.

Bei der erfindungsgemäßen Anordnung ist in vorteilhafter Weise die umschaltbare Stromsenke über einen ohmschen Widerstand an die Signalleitung angeschlossen; dadurch läßt sich eine Steuerspannung mit Hysterese gewinnen, die beispielsweise zur Ansteuerung einer Pegelauswerteschaltung in der Signalerfassungseinrichtung eingesetzt werden kann.

Ist in vorteilhafter Weise die umschaltbare Stromsenke über einen Kaltleiter mit der Signalleitung verbunden, dann läßt sich dadurch eine thermische Überlastung der Entladeschaltung, beispielsweise bei übermäßiger Schalthäufigkeit, verhindern.

Zur Erläuterung der Erfindung ist in
Figur 1 der prinzipielle, bekannte Aufbau einer Anordnung zum Übertragen von Binärsignalen über eine Signalleitung mit einer Entladeschaltung und in
Figur 2 ein Ausführungsbeispiel einer vorteilhaften Entladeschaltung gezeigt.

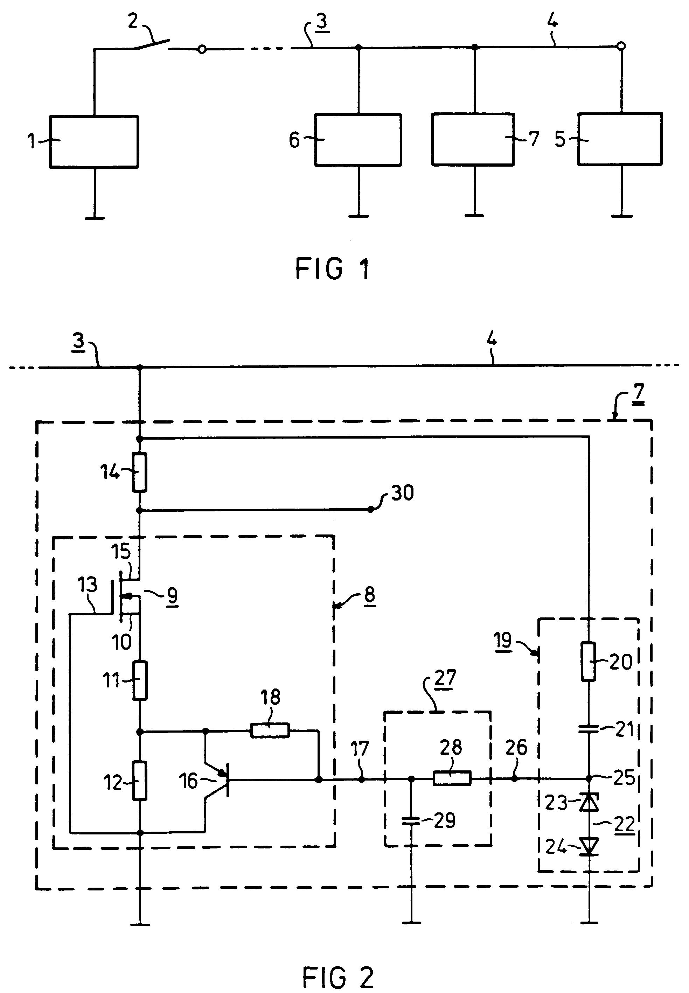

Die in Figur 1 dargestellte Anordnung enthält eine Gleichspannungsquelle 1, die beispielsweise eine Gleichspannung zwischen 24 und 250 V abgeben kann. Die Gleichspannungsquelle 1 ist über einen Meldekontakt 2, bei dem es sich auch um einen elektronischen Signalschalter handeln kann, unter Erzeugen von Binärsignalen jeweils zeitweise an eine Signalleitung 3 anschließbar. Die Signalleitung 3 kann beispielsweise eine kapazitätsbehaftete Leitung mit 220 nF/km sein. Am Ende 4 der Leitung 3 befindet sich eine Signalerfassungseinrichtung 5, der eine Überspannungsschutzanordnung 6 und eine Entladeschaltung 7 zugeordnet sind; beide Anordnungen 6 und 7 sind ebenfalls am Ende 4 der Leitung 3 angeschlossen.

Die Entladeschaltung 7 ist in einer bevorzugten Ausführungsform so ausgeführt, wie es in Figur 2 dargestellt ist. Die dargestellte Entladeschaltung enthält eine Stromsenke 8 mit einem selbstleitenden n-Kanal-FeldeffektTransistor 9. An die Source-Elektrode 10 des Transistors 9 ist eine Reihenschaltung eines Widerstandes 11 mit dem Widerstandswert R₁ und eines weiteren Widerstandes 12 mit dem Widerstandswert R₂ nach Masse angeschlossen. Ebenfalls mit Masse ist die Gate-Elektrode 13 des Feldeffekt-transistors 9 verbunden. Über einen ohmschen Widerstand 14 ist die Drain-Elektrode 15 des Feldeffekt-Transistors 9 mit dem Ende 4 der Signalleitung 3 verbunden.

Parallel zu dem weiteren Widerstand 12 ist ein pnp-Transistor 16 mit seiner Emitter-Kollektorstrecke geschaltet; die Basis dieses Transistors steht mit einem Steuereingang 17 der umschaltbaren Stromsenke 8 in Verbindung. Zwischen Emitter und Basis des Transistors 16 liegt ein hochohmiger Widerstand 18, der den Transistor 16 sperrt, wenn die Spannung an der Signalleitung 3 ansteigt oder konstant bleibt. Wird der Transistor 16 durch ein entsprechendes Signal am Steuereingang 17 der umschaltbaren Stromsenke 8 leitend gesteuert, dann wird der weitere Widerstand 12 überbrückt, wodurch der von den Widerständen 11 und 12 gebildete strombestimmende Widerstand der umschaltbaren Stromsenke 8 wesentlich verkleinert wird, weil R₁ << R₂ ist. Es fließt dann ein hoher Entladestrom.

Parallel zu der umschaltbaren Stromsenke 8 ist an das Ende 4 der Signalleitung 3 eine Schwellenwert-Erfassungseinrichtung 19 angeschlossen, die außer einer Reihenschaltung eines Widerstandes 20 mit einem Speicherkondensator 21 eine Diodenanordnung 22 mit einer Zenerdiode 23 und einer Flußdiode 24 enthält. Der Widerstand 20 dient als Schutzwiderstand beim Aufladen des Speicherkondensators 21, wenn die Spannung der Gleichspannungsquelle 1 an der Leitung 3 liegt. Die Diodenanordnung 22 ist so dimensioniert, daß die Zenerdiodenspannung und Flußdiodenspannung etwa der Gate-Source-Spannung des Feldeffekt-Transistors 9 entspricht. Gegenenfalls kann die Zenerdiode 23 auch durch eine umgekehrt geschaltete Flußdiode ersetzt werden.

Der Verbindungspunkt 25 zwischen der Diodenanordnung 22 und dem Speicherkondensator 21 bildet den Ausgang 26 der Schwellenwert-Erfassungseinrichtung 19. Zwischen diesem Ausgang 26 und dem Steuereingang 17 der umschaltbaren Stromsenke 8 ist eine Verzögerungsschaltung 27 geschaltet, die einen Widerstand 28 und einen Kondensator 29 enthält. Durch entsprechende Bemessung der Elemente 28 und 29 der Verzögerungsschaltung 27 läßt sich eine Ansprechverzögerung der umschaltbaren Stromsenke 8 einstellen.

Die dargestellte Anordnung bzw. Entladeschaltung arbeitet in folgender Weise:

Sinkt nach jeweiligem Öffnen des Meldekontaktes 2 die Gleichspannung an der Signalleitung 3 bzw. deren Ende 4 ab, so wird von einem durch die Diodenanordnung 22 vorgegebenen Schwellenwert an der Transistor 16 der umschaltbaren Stromsenke 8 angesteuert. Dadurch wird der bis dahin sehr kleine Entladestrom durch die umschaltbare Stromsenke 8 stark vergrößert (Überbrückung des Widerstandes 12) und das Absinken der Spannung an der Signalleitung 3 beschleunigt. Der Transistor 16 wird zunehmend bis zur Sättigungsspannung durchgesteuert, so daß dann schließlich der Entladestrom nur noch durch den Wert R₁ des Widerstandes 11 bestimmt ist. Es fließt dann ein sehr hoher Entladestrom von z. B. 20 mA. Wird der Meldekontakt 2 wieder geschlossen, dann steigt die Spannung am Ausgang 26 der Schwellenwert-Erfassungseinrichtung 19 wieder an und der Transistor 16 wird gesperrt. Es ist dann wieder auch der weitere Widerstand 12 voll wirksam; der Entladestrom ist sehr gering.

Abschließend ist noch darauf hinzuweisen, daß an einem Ausgang 30 und damit am Anschluß des Widerstandes 14 an der umschaltbaren Stromsenke 8 ein Signal abgenommen werden kann, daß eine Hysterese aufweist. Mit diesem Signal kann eine figürlich nicht dargestellte Pegelauswertung in der Signalerfassungseinrichtung 5 angesteuert werden.

## Patentansprüche

1. Anordnung zum Übertragen von Binärsignalen über eine Signalleitung an eine Signalerfassungseinrichtung, bei der
- eine Gleichspannungsquelle (1) unter Erzeugen der Binärsignale jeweils zeitweise an die Signalleitung (3) anschließbar ist und
- an die Signalleitung (3) eine Entladeschaltung (7) angeschlossen ist,
**dadurch gekennzeichnet**, daß
- die Entladeschaltung (7) eine umschaltbare Stromsenke (8) enthält, die an die Signalleitung (3) angeschlossen ist,
- die Entladeschaltung (7) eine Schwellenwert-Erfassungseinrichtung (19) aufweist, die an die Signalleitung (3) parallel zur umschaltbaren Stromsenke (8) angeschlossen ist, und
- der Ausgang (26) der Schwellenwert-Erfassungseinrichtung (19) mit einem Steuereingang (17) der umschaltbaren Stromsenke (8) derart verbunden ist, daß
- ein strombestimmender Widerstand (11, 12) der umschaltbaren Stromsenke (8) durch die Schwellenwert-Erfassungseinrichtung (19) gesteuert veränderbar ist.

2. Anordnung nach Anspruch 1,
**dadurch gekennzeichne**t, daß
- die Schwellenwert-Erfassungseinrichtung (19) in Reihe mit einem Speicherkondensator (21) eine Diodenanordnung (22) enthält und
- der Verbindungspunkt (25) von Speicherkondensator (21) und Diodenanordnung (22) den Ausgang (26) der Schwellenwert-Erfassungseinrichtung (19) bildet.

3. Anordnung nach Anspruch 1 oder 2,
**dadurch gekennzeichnet**, daß
- die umschaltbare Stromsenke (8) steuereingangsseitig mit einem Stromverstärker (16) versehen ist.

4. Anordnung nach einem der vorangehenden Ansprüche,
**dadurch gekennzeichne**t, daß
- dem Steuereingang (17) der umschaltbaren Stromsenke (8) eine Verzögerungsschaltung (27) vorgeordnet ist.

5. Anordnung nach einem der vorangehenden Ansprüche,
**dadurch gekennzeichnet**, daß
- die umschaltbare Stromsenke (8) über einen ohmschen Widerstand (14) an die Signalleitung (3) angeschlossen ist.

6. Anordnung nach einem der vorangehenden Ansprüche,
**dadurch gekennzeichnet**, daß
- die umschaltbare Stromsenke über einen Kaltleiter mit der Signalleitung verbunden ist.

## Claims

1. Arrangement for the transmission of binary signals via a signalling line to a signal detection device, in which
- a dc voltage source (1) is capable of being connected, temporarily at any given time, to the signalling line (3), accompanied by generation of the binary signals and
- a discharge circuit (7) is connected to the signalling line (3),
characterised in that
- the discharge circuit (7) contains a switchable current sink (8) that is connected to the signalling line (3),
- the discharge circuit (7) comprises a threshold-value detection device (19) that is connected to the signalling line (3) parallel to the switchable current sink (8), and
- the output (26) of the threshold-value detection device (19) is connected to the control input (17) of the switchable current sink (8) in such a way that
- a current-determining resistor (11, 12) of the switchable current sink (8) is capable of being varied in controlled manner by means of the threshold-value detection device (19).

2. Arrangement according to Claim 1,
characterised in that
- the threshold-value detection device (19) contains a diode arrangement (22) in series with a storage capacitor (21) and
- the connecting point (25) of storage capacitor (21) and diode arrangement (22) forms the output (26) of the threshold-value detection device (19).

3. Arrangement according to Claim 1 or 2,
characterised in that
- the switchable current sink (8) is provided with a current amplifier (16) on the control-input side.

4. Arrangement according to one of the preceding claims,
characterised in that
- a delay circuit (27) is arranged upstream of the control input (17) of the switchable current sink (8).

5. Arrangement according to one of the preceding claims,
characterised in that
- the switchable current sink (8) is connected to the signalling line (3) via an ohmic resistance (14).

6. Arrangement according to one of the preceding claims,
characterised in that
- the switchable current sink is connected to the signalling line via a low-temperature conductor.

## Revendications

1. Dispositif destiné à la transmission de signaux binaires à un dispositif de détection de signaux par l'intermédiaire d'une ligne de signalisation, dans lequel
- une source (1) de tension continue générant des signaux binaires peut être raccordée temporairement à la ligne (3) de signalisation, et
- un circuit de décharge (7) est raccordé à la ligne (3) de signalisation,
caractérisé par le fait que
- le circuit de décharge (7) comporte un puits (8) de courant commutable, qui est raccordé à la ligne (3) de signalisation,
- le circuit de décharge (7) comporte un dispositif (19) de détection de valeur de seuil, qui est raccordé à la ligne (3) de signalisation parallèlement au puits (8) de courant commutable,
- la sortie (26) du dispositif (19) de détection de valeur de seuil est reliée à une entrée de commande (17) du puits (8) de courant commutable, de telle sorte
- qu'une résistance (11, 12) définissant le courant du puits (8) de courant commutable, puisse être modifiée d'une manière commandée par le dispositif (19) de détection de valeur de seuil.

2. Dispositif selon la revendication 1,
caractérisé par le fait que
- le dispositif (19) de détection de valeur de seuil comporte un dispositif (22) à diodes branché en série avec un condensateur d'accumulation (21), et
- le point de liaison (25) entre le condensateur d'accumulation (21) et le dispositif (22) à diodes constitue la sortie (26) du dispositif (19) de détection de valeur de seuil.

3. Dispositif selon la revendication 1 ou 2,
caractérisé par le fait que
- le puits (8) de courant commutable est pourvu du côté de l'entrée de commande d'un amplificateur (16) de courant.

4. Dispositif selon l'une quelconque des revendications précédentes,
caractérisé par le fait que
- un circuit de retardement (27) est branché du côté amont de l'entrée de commande (17) du puits (8) de courant commutable.

5. Dispositif selon l'une quelconque des revendications précédentes,
caractérisé par le fait que
- le puits (8) de courant commutable est raccordé à la ligne (3) de signalisation par l'intermédiaire d'une résistance ohmique (14).

6. Dispositif selon l'une quelconque des revendications précédentes,
caractérisé par le fait que
- le puits de courant commutable est relié à la ligne de signalisation par l'intermédiaire d'une thermistance à coefficient de température positif.
